Europäisches Patentamt

European Patent Office

Office européen des brevets

(11) Publication number: **0 082 016**
**B1**

## (12) EUROPEAN PATENT SPECIFICATION

(45) Date of publication of patent specification: **16.06.87**

(21) Application number: **82306675.8**

(22) Date of filing: **14.12.82**

(51) Int. Cl.⁴: **B 05 C 15/00, B 05 B 15/04, B 01 D 47/02, B 01 D 53/14, B 01 D 53/34**

(54) **An air handling system for a paint applying enclosure.**

(30) Priority: **14.12.81 US 330744**

(43) Date of publication of application:
**22.06.83 Bulletin 83/25**

(45) Publication of the grant of the patent:
**16.06.87 Bulletin 87/25**

(84) Designated Contracting States:
**BE DE FR GB IT**

(56) References cited:
**GB-A-2 026 683**
**GB-A-2 057 912**

(73) Proprietor: **HADEN DRYSYS INTERNATIONAL LIMITED**
**7-12 Tavistock Square**
**London WC1H 9LZ (GB)**

(72) Inventor: **Bradshaw, Norman Frederick**
**128 Richmond Hill**
**Surrey (GB)**
Inventor: **Bloomer, Ivan**
**5 Deena Close**
**Queens Drive London (GB)**

(74) Representative: **Needle, Jacqueline et al**
**PAGE, WHITE & FARRER 5 Plough Place New Fetter Lane**
**London EC4A 1HY (GB)**

Courier Press, Leamington Spa, England.

## Description

The present invention relates to an air handling system for a paint applying enclosure.

Recent trends have developed two major factors in the design of industrial facilities, i.e. the increasingly stringent governmental pollution control requirements, and the cost and availability of energy. Particularly difficult problems in this regard are found in the design of paint spray booth facilities for the application of paint to automotive bodies and similar products, due to the enormous volumes of air flow required in the paint spray booths in industry.

The pollution problems are associated primarily with the organic liquid constituents, including solvents, thinners and diluents of paints. Such liquid constituents are vaporised during the paint application, which vapours pass into air circulated through the booth. Such air must be circulated at relatively high volume in order to enable the paint sprayers to work in a safe, healthful and clean environment.

The rigorous standards of emissions applied to industrial facilities precludes the discharge of such organic or solvent vapour laden air directly into the atmosphere, and such vapours in the discharged air are required to be reduced to very low levels.

A common approach in eliminating such vapours which are combustible is to incinerate the same by passing the air into an incineration chamber which is heated by a burner to raise the temperature of the air sufficiently to cause oxidation of, for example, the hydrocarbons into carbon dioxide and water vapour prior to being exhausted to the atmosphere.

However, for the enormous air flow rates exhausted from paint spray booths, the incineration process requires vast expenditures of energy, thus rendering this solution very costly to implement.

Another alternate approach which has been attempted and considered in this context is the use of adsorber beds such as of activated charcoal, over which the exhaust air is passed for direct adsorption of the solvent vapours, thus enabling their elimination from the exhaust air.

Again, the enormous air volumes in automotive production and similar applications and the need to regenerate the adsorber beds render this approach extremely expensive.

One solution to these problems which has been proposed involves the replacement of the organic solvent based paint with water based paint, the elimination of vapours thus enabling direct discharge of the exhaust air to the atmosphere, after filtration or other treatment of the air to remove the paint solids.

While effective in this regard, the water based paints require close control over the temperature and humidity of the air supplied to the booth, with air cooling and dehumidification during summertime, and heating and humidification during wintertime operation. This psychrometric control requires considerable capital investment and furthermore entails considerable energy to execute.

GB—A—2026683 describes one system in which an attempt to reduce the energy requirement of input air conditioning devices has been made.

GB—A—2057912A describes another approach in which, when organic solvent based paint is used, vapour is removed from the exhaust air by way of vapour removal means. To use energy efficiently, heat exchangers are also provided to enable indirect transfers of energy within the system as appropriate.

Thus, GB—A—2057912A provides an air handling system for a paint applying enclosure wherein paint application processes are conducted, said air handling system comprising air supply means for introducing a flow of air into said enclosure, air exhaust means for producing a flow of exhaust air from said enclosure, said air exhaust means including paint solid removal means arranged to wash the exhaust air with water to remove paint solids therefrom to provide filtered exhaust air, vapour removal means afor removing organic vapour from said filtered exhaust air, including a supply of organic vapour absorber liquid for removing organic vapour from said exhaust air, and regenerator means coupled with said vapour removal means for removing absorbed organics from said absorber liquid, in that said paint solid removal means comprising a water flow system washing said exhaust air flow, means for collecting said water flow after being passed in contact with said exhaust air flow, means for removing paint solids from said collected water and having an outlet for the discharge of water from which paint solids have been removed, water stripper means connected to said outlet and arranged to remove solvents from the water from which paint solids have been removed, and a recirculation conduit connecting the outlet of the water stripper means to the water flow system.

The present invention provides an air handling system for a paint applying enclosure as defined above (known from GB—A—2057912A), characterised in that said air supply means includes an air conditioner arranged to receive and condition fresh air and an air mixer connected to receive the conditioned fresh air from said air conditioner, and in that an air divider is arranged to receive said filtered exhaust air and to supply a predetermined portion thereof to said air mixer, and said air mixer being arranged to mix said conditioned fresh air and said predetermined portion of said filtered exhaust air and to feed the mixture to said enclosure.

In the system of the invention solvent stripping is executed both on the water, after the filtration and removal of the paint solids, and on the exhaust air after it has passed through the water scrubbing system to remove the paint solids. A portion of the exhaust air is returned to the spray booth either before or after it is stripped of solvent vapours. In an embodiment, a portion of the water is also returned to the spray booth before it is stripped of solvent vapours.

Embodiments of the present invention will hereinafter be described, by way of example, with reference to the accompanying drawings, in which:

FIGURE 1 is a diagrammatic view of an embodiment of a paint application facility incorporating an air handling system of the present invention, and

FIGURE 2 shows a further embodiment of an air handling system of the present invention.

The systems described herein have particular application to a paint spray booth of the type including the use of a water flooded floor beneath the paint spray area in which the paint spray operations are conducted and in which the paint and solvent laden air is drawn down through the flow grills and exits through particulate scrubbing means beneath the grilled floor of the spray booth working area.

The air and water passing with great turbulence and intimate contact through the tubes causes the solids in the paint, i.e., the pigments, resin and other components, to be removed from the air and become suspended within the water flow. Such an arrangement is disclosed in U.S. Patent No. 3,421,293.

In order to remove the paint solids from the circulated treatment water, arrangements have been provided for collecting the paint solids and removing them from the water flow, as by causing them to raft on the surface of the collecting tank. Such an arrangement is disclosed in U.S. Patent No. 4,100,066.

The particular composition in paint used in automotive production and similar processes varies with the particular requirements and with the particular manufacturer of the paint.

However, a number of organic liquids are usually included, as solvents, thinners and diluents, some of which are typically soluble in water and others of which are not.

Accordingly, in passing with the water in intimate contact therewith, the air exhausted from the spray booth tends to cause a proportion of the solvent vapours contained in the exhaust air to go into solution with the circulated treatment water. The remaining hydrophobic vapours pass out with the exhaust air.

Thus, if the composition of the paint is such that a significant proportion of the liquid constituents are water soluble, such water flow treatment utilized in the spray booth air exhaust system itself represents means for partially eliminating the organic vapours.

On the other hand, the recirculated water cannot continue indefinitely to pick up the organic compounds and soon becomes saturated with them, and some means must be provided for their continuous removal from the circulated water.

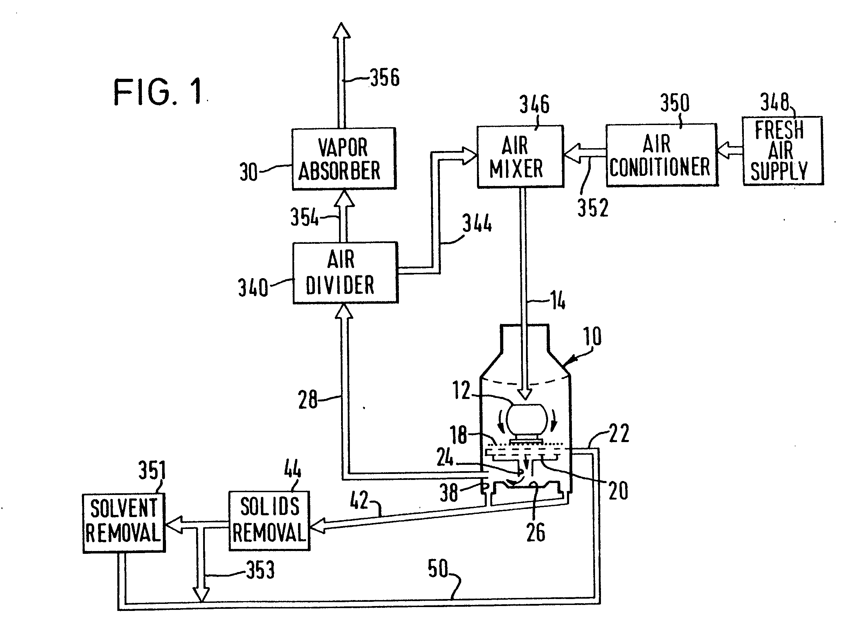

FIGURE 1 shows an example of a paint application facility including a paint spray booth 10, comprising an enclosure within which an auto body shell 12 or other component is painted during production. The air supplied for ventilation is received via ducting 14 and caused to be circulated by means of a supply fan (not shown).

The air supplied passes through a grill 18 disposed across the floor of the paint spray booth 10 and thence over a flooded subfloor 20 which receives water flow via supply line 22. The water over the subfloor 22 tends to partially collect the overspray during paint spraying operations, which settles into the water. The air with the balance of overspray, partially fine particles and solvent vapours, is circulated out through longitudinally spaced outlet tubes 24 through which the water from the floor 20 flows. An intense scrubbing action of the air occurs in the tubes and the paint is transferred to the water which flows into a collecting pan 26.

The exhausted air, after passing through the outlet tubes 24 and having the paint solids thereby substantially removed, passes out through an exhaust duct indicated at 28 and thence passes through an exhaust air organic vapour absorber unit or stripper 30, which will be described hereinafter in further detail, and is then directed by an exhaust blower (not shown) to an air duct 356.

The water entraining the paint solids and having a proportion of solvents dissolved therein passes into collecting flumes 38 from which it is withdrawn through line 42 to be directed to a paint solid removing apparatus 44. This apparatus 44 may be of the type described in the above mentioned U.S. Patent No. 4,100,066 and comprises a first collecting chamber (not shown) for receiving the paint solid containing water. The paint solids are collected in said first collecting chamber and are then periodically removed.

A level control tank (not shown) is also provided and is arranged to regulate the water in the interior of the removing apparatus 44 in order to maintain the appropriate levels to contact the removal process.

A return line 50 recirculates the water via a pump (not shown) onto the spray booth subfloor to enable continuous execution of the process. Thus, the air exhausted through the exhaust duct 28 is substantially free from paint solids but does contain those organic solvent vapours which have not gone into solution with the water.

Similarly, the water in the level control tank (not shown) of the solids removing apparatus 44 has had the solids substantially removed therefrom but still contains the solvents in solution. The solvent must be continuously removed if the water is not to become saturated.

The illustrated system is arranged to remove solvent from the exhausted air after passing into the exhaust duct 28 and also to remove the solvents from the water after solids removal in apparatus 44 and entry into the level control tank 48. The elimination of vapours from the air is achieved in the exhaust air organic vapour absorber unit 30.

The construction of the absorber unit 30 is not illustrated herein, but it may be of any suitable construction. For example, it may be constructed in a similar manner to the absorber unit 30 shown in UK—A—2057912 in which absorbing liquid is circulated via a pump through a bank of spray nozzles (not shown). The liquid may comprise an oil or oil base derivative or any other substance having an affinity for organic solvents. The air is arranged to flow through a matrix which is sprayed with the liquid absorbent. The matrix is arranged to facilitate the development of a very large liquid absorbing surface to which the organic solvent vapours are attracted. Subsequently, it causes the now solvent-laden liquid to coalesce into larger droplets which may be separated from the air stream by gravity or other means. For example, after passing through the coalescing matrix, the air may be flowed through a series of baffles arranged to cause the now larger-sized absorber liquid droplets to be eliminated from the air stream. The liquid droplets may then be collected and subsequently returned by way of the pump to the spray nozzles.

Since a given quantity of absorbing liquid cannot absorb the solvent vapours indefinitely, regeneration apparatus is provided through which a portion of the absorbing liquid is circulated.

In the regeneration process, the heat required to drive off the solvent in the absorbing liquid is modest since the volume and specific heat of absorbing liquid is relatively low compared to other absorbing media.

The arrangement of the regeneration apparatus is not illustrated herein, and the apparatus may be of any suitable construction. For example, the solvent laden absorbing liquid may be purged of solvents by heating it to a temperature at which it releases the solvent vapours. The vapours can then be condensed and subsequently recovered. As described in GB—A—2057912, the solvent laden absorbing liquid may be heated to purging temperature by being sprayed onto heating coils. The regenerated absorbing liquid is then fed back to the absorber unit 30, preferably by way of a liquid-to-liquid heat exchanger such that the regenerated absorbing liquid preheats the solvent laden absorbing liquid to thereby increase the efficiency of the regeneration process.

With the present trend towards automated paint application, it is apparent that somewhat higher levels of organic vapour in paint application booths can be tolerated compared to hand application by humans which is governed by rigid environmental regulations. In the embodiment illustrated in FIGURE 1, exhaust air exiting from the spray booth 10 in exhaust duct 28 is delivered to an air divider 340 which diverts one portion of the exhaust air via duct 354 to the vapour absorber 30 and the remaining portion to an air mixer 346. Thus, as organic vapour is only removed from a portion of the exhaust air the overall costs of the system may be reduced. The divider 340 and the mixer 346 may comprise conventional variable valve-type chambers to permit selection of the proportions of the air to be mixed or divided.

The vapour-free exhaust air issuing from the vapour absorber 30 may be delivered by the duct 356 through a heat exchanger (not shown) and then exhausted or used in other processes. Thus, the heat exchanger may be used to transfer heat energy from the exhaust air to prewarm the incoming air to the spray booth to thereby enhance the efficiency of the process.

Make-up fresh air from a supply 348 is passed through an air conditioner 350 and is delivered to the mixer 346 where it is combined with the exhaust air from the booth 10. The outflow from the mixer 346 is coupled with the inlet duct 14 such that a portion of the exhaust air from the booth 10 having organic vapour therein is mixed with fresh make-up air and is returned for use in the booth 10. Since less than the entire volume of exhaust air is being stripped of organic vapour, it is apparent that an absorber 30 of somewhat smaller capacity than that which would be needed to treat the entire volume may be employed, and thus both capital and operating costs of the vapour removal process are reduced. Moreover, the operating efficiency of the vapour absorber 30 is notably increased by virtue of the higher concentration of organic vapour in the exhaust air.

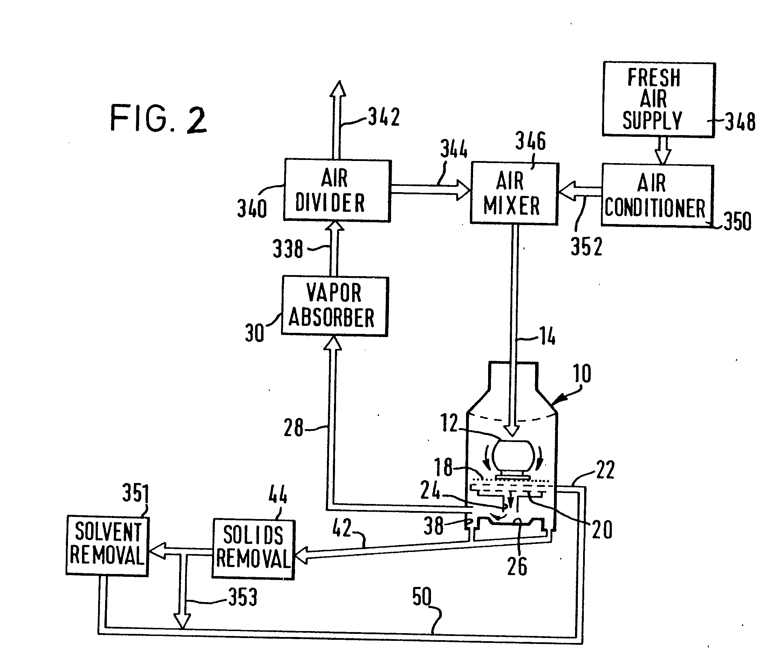

The overall recirculation concept described immediately above may also be applied to the removal of solvents in the solvent water scrubber portion of the system. For example, as shown in FIGURES 1 and 2, after removal of paint solids in the removing apparatus 44, portions of the solvent laden water are directed to a solvent removal apparatus generally indicated at 351 and directly to the return line 50 via a line 353. Again, this arrangement reduces capital and operating costs since only a portion of the water exiting the booth 10 need be processed for solvent removal, and the portion which is so processed contains a higher concentration of solvents compared to a system in which the entire volume of water is processed by the solvent removal apparatus as 351.

The construction of the apparatus 351 for removing solvent from the circulating water is not illustrated, but the apparatus may be of any suitable construction. For example, the apparatus may, as described in UK—A—2057912, include vacuum distillation means arranged to apply a vacuum above the water so as to cause the direct vaporization of the organic compounds. In the apparatus described in this earlier British Patent Application, the water is elevated approximately 9 metres to a condensing chamber to enable a low vapour pressure to be maintained in the condensing chamber. This chamber is continuously purged to remove noncondensable gasses such as air and the relatively low pressure facilitates the vaporization of the solvent and thus removal from the circulated water without heating of the water mass itself.

A further embodiment of the present invention is shown in FIGURE 2 in which a portion of the air exhausted from the spray booth 10 is recirculated back to the booth 10. In this embodiment, the entire volume of the exhaust air delivered via the conduit 28 is processed by the vapour absorber 30 and is then routed to the air divider 340 by a conduit 338. A portion of the vapour free exhaust air is then delivered to an exhaust by a conduit 342, the remaining portion being routed by the conduit 344 to the air mixer 346 where it is combined with fresh make-up as described above. Thus, the entire volume of air supplied to the booth 10 by inlet duct 14 is substantially vapour free.

## Claims

1. An air handling system for a paint applying enclosure (10) wherein paint application processes are conducted, said air handling system comprising air supply means (14, 346—350) for introducing a flow of air into said enclosure, air exhaust means (28) for producing a flow of exhaust air from said enclosure, said air exhaust means including paint solid removal means arranged to wash the exhaust air with water to remove paint solids therefrom to provide filtered exhaust air, vapour removal means (30) for removing organic vapour from said filtered exhaust air, including a supply of organic vapour absorber liquid for removing organic vapour from said exhaust air, and regenerator means coupled with said vapour removal means for removing absorbed organics from said absorber liquid, said paint solid removal means comprising a water flow system (20, 22) washing said exhaust air flow, means for collecting said water flow after being passed in contact with said exhaust air flow, means (44) for removing paint solids from said collected water and having an outlet for the discharge of water from which paint solids have been removed, water stripper means (351) connected to said outlet and arranged to remove solvents from the water from which paint solids have been removed, and a recirculation conduit (50) connecting the outlet of the water stripper means to the water flow system, characterised in that said air supply means (14, 346—350) includes an air conditioner (350) arranged to receive and condition fresh air and an air mixer (346) connected to receive the conditioned fresh air from said air conditioner (350), and in that an air divider (340) is arranged to receive said filtered exhaust air and to supply a predetermined portion thereof to said air mixer (346), and said air mixer (346) being arranged to mix said conditioned fresh air and said predetermined portion of said filtered exhaust air and to feed the mixture to said enclosure.

2. An air handling system as claimed in Claim 1, characterised in that the filtered exhaust air is fed to the vapour removal means (30) by way of the air divider (340) such that a portion of said exhaust air is returned to said enclosure prior to removal of organic vapour from said exhaust air by said vapour removal means (30).

3. An air handling system as claimed in Claim 1, characterised in that the filtered exhaust air is fed to the air divider (340) by way of the vapour removal means (30) such that at least a portion of the exhaust air from which said organic vapour has been removed is returned to said enclosure.

4. An air handling system as claimed in any preceding claim, characterised in that a bypass conduit (353) is provided and connects the outlet of the paint solid removing means to said recirculation conduit (50).

5. An air handling system as claimed in any preceding claim, wherein said water stripper means (351) comprises means for vaporizing said solvents and means for condensing at least a portion of the vaporized solvents.

6. An air handling system as claimed in any preceding claim, further comprising means coupled to the regenerator means for recirculating regenerated absorber liquid to said vapour removal means.

## Patentansprüche

1. Luftbehandlungssystem für eine Farbspritzkabine (10), worin Farbspritzverfahren durchgeführt werden, wobei das Luftbehandlungssystem eine Luftzuführungseinrichtung (14, 346—350) zur Einführung eines Luftstroms in die Kabine, eine Luftauslaßeinrichtung (28) zur Hervorbringung eines Abluftstroms von der Kabine aufweist, wobei die Luftauslaßeinrichtung eine Farbfeststoffbeseitigungseinrichtung, die zum Waschen der Abluft mit Wasser eingerichtet ist, um, zur Erzeugung von filtrierter Abluft, Farbfeststoffe daraus zu entfernen und eine Dampfbeseitigungseinrichtung (30) zur Entfernung von organischem Dampf der filtrierten Abluft aufweist, welche eine Zuführungseinrichtung von Absorberflüssigkeit für organischen Dampf zur Entfernung von organischem Dampf aus der Abluft und eine Regeneratoreinrichtung zur Entfernung von absorbierten organischen Stoffen aus der Absorberflüssigkeit aufweist, die mit der Dampfbeseitigungseinrichtung gekoppelt ist, wobei die Farbfeststoffbeseitigungseinrichtung ein Wasserstromsystem (20, 22), das den Abluftstrom wäscht, eine Einrichtung zum Auffangen des Wasserstroms, nachdem er in Kontakt mit dem Abluftstrom war, eine Einrichtung (44) zur Entfernung von Farbfeststoffen aus dem aufgefangenen Wasser aufweist und einen Auslaß zum Ablassen von Wasser, aus dem Farbfeststoffe entfernt worden sind, eine Wasserabstreifeinrichtung (351), die an den Auslaß angeschlossen ist und zur Entfernung von Lösungsmitteln aus dem Wasser, aus dem Farbfeststoffe entfernt worden sind, eingerichtet ist, und eine Rückführungsleitung (50) aufweist, die den Auslaß der Wasserabstreifeinrichtung mit dem Wasserstromsystem verbindet, dadurch gekennzeichnet, daß die Luftzuführungseinrichtung (14, 346—350) eine Klimaanlage (350), die zum Aufnehmen und Klimatisieren von Frischluft eingerichtet ist, und einen Luftmischer (346) aufweist, der so angeschlossen ist, daß er die klimatisierte Frischluft von der Klimaanlage (350) aufnimmt, und daß ein Luftteiler (340) so angeordnet ist, daß er die filtrierte Abluft aufnimmt und einen vorbestimmten Teil davon dem Luftmischer (346) zuführt, und daß der Luftmischer (346) so angeordnet ist, daß er die klimatisierte Frischluft und den vorbestimmten Teil der filtrierten Abluft mischt und die Mischung der Kabine zuführt.

2. Luftbehandlungssystem nach Anspruch 1, dadurch gekennzeichnet, daß die filtrierte Abluft über den Luftteiler (340) der Dampfbeseitigungseinrichtung (30) zugeführt wird, so daß ein Teil der Abluft zur Kabine zurückgeführt wird, bevor der organische Dampf aus der Abluft von der Dampfbeseitigungseinrichtung (30) entfernt wird.

3. Luftbehandlungssystem nach Anspruch 1, dadurch gekennzeichnet, daß die filtrierte Abluft über die Dampfbeseitigungseinrichtung (30) dem Luftteiler (340) zugeführt wird, so daß wenigstens ein Teil der Abluft, aus der der organische Dampf entfernt worden ist, zur Kabine zurückgeführt wird.

4. Luftbehandlungssystem nach einem der vorangehenden Ansprüche, dadurch gekennzeichnet, daß eine Umgehungsleitung (353) vorgesehen ist, und den Auslaß der Farbfeststoffbeseitigungsrichtung mit der Rückführungsleitung (50) verbindet.

5. Luftbehandlungssystem nach einem der vorangehenden Ansprüche, worin die Wässerabstreifeinrichtung (351) eine Einrichtung zum Verdampfen der Lösungsmittel und eine Einrichtung zum Kondensieren wenigstens eines Teils der verdampften Lösungsmittel aufweist.

6. Luftbehandlungssystem nach einem der vorangehenden Ansprüche, das weiter eine Einrichtung aufweist, die an die Regeneratoreinrichtung angeschlossen ist, um regenerierte Absorberflüssigkeit zu der Dampfbeseitigungseinrichtung zurückzuführen.

**Revendications**

1. Système de traitement de l'air pour une enceinte d'application de peinture (10) dans laquelle des opérations d'application de peinture sont exécutées, ledit système de traitement de l'air comprenant des moyens (14, 346—350) d'alimentation en air servant à introduire un écoulement d'air dans ladite enceinte, des moyens (38) d'évacuation de l'air servant à produire un écoulement d'air sortant s'évacuant de ladite enceinte, lesdits moyens d'évacuation de l'air comprenant des moyens d'élimination des substances solides présentes dans la peinture, agencés de manière à laver l'air sortant avec de l'eau afin d'éliminer de cet air les substances solides présentes dans la peinture de manière à fournir un air sortant filtré, des moyens (30) d'élimination de la vapeur, servant à éliminer la vapeur organique dans ledit air sortant filtré et comprenant une alimentation d'un liquide absorbant la vapeur organique de manière à éliminer cette dernière dudit air sortant, et des moyens régénérateurs accouplés auxdits moyens d'élimination de la vapeur pour éliminer dudit liquide absorbant, les substances organiques absorbées, lesdits moyens d'élimination des substances solides comportant un système d'écoulement d'eau (20, 22) lavant ledit écoulement d'air sortant, des moyens pour collecter ledit écoulement d'eau après qu'il soit venu en contact avec ledit écoulement d'air sortant, des moyens (44) servant à éliminer ladite eau collectée et les substances solides présentes dans la peinture et comportant une sortie pour évacuer l'eau dont les substances solides présentes dans la peinture ont été éliminées, des moyens (351) d'épuration de l'eau raccordés à ladite sortie et agencés de manière à éliminer les solvants de l'eau, dont les substances solides présentes dans la peinture ont été retirées, et une canalisation de recirculation (50) raccordant la sortie des moyens d'épuration de l'eau au système d'écoulement d'eau, caractérisé en ce que lesdits moyens (14, 346—350) d'alimentation en air comportent un conditionneur d'air (350) agencé de manière à recevoir et à conditionner l'air frais et un mélangeur d'air (346) raccordé de manière à recevoir l'air frais conditionné en provenance dudit conditionneur d'air (350) et en ce qu'un diviseur (340) d'air est agencé de manière à recevoir ledit air sortant filtré et à en envoyer une partie prédéterminée audit mélangeur d'air (346), et que ledit mélangeur d'air (346) est agencé de manière à mélanger ledit air frais conditionné et ladite partie prédéterminée dudit air sortant filtré et à envoyer le mélange à ladite enceinte.

2. Système de traitement de l'air selon la revendication 1, caractérisé en ce que l'air sortant filtré est dirigé sur les moyens d'élimination de vapeur (30) par l'intermédiaire du diviseur d'air (340) de sorte qu'une partie dudit air sortant est retournée à ladite enceinte avant élimination de la vapeur organique dudit air sortant par lesdits moyens d'élimination de vapeur (30).

3. Système de traitement de l'air selon la revendication 1, caractérisé en ce que l'air sortant filtré est dirigé sur le diviseur d'air (340) par l'intermédiaire du moyen d'élimination de vapeur (30) de sorte qu'au moins une partie de l'air sortant, dont ladite vapeur organique a été retirée, est retournée à ladite enceinte.

4. Système de traitement de l'air selon l'une quelconque des revendications précédentes, caractérisé en ce qu'il est prévu une canalisation de dérivation (353), qui raccorde la sortie des moyens d'élimination des substances solides présentes dans la peinture à ladite canalisation de recirculation (50).

5. Système de traitement de l'air selon l'une quelconque des revendications précédentes, dans lequel lesdits moyens (351) d'épuration de l'air comprennent des moyens pour vaporiser lesdits solvants et des moyens pour condenser au moins une partie des solvants vaporisés.

6. Système de traitement de l'air selon l'une quelconque des revendications précédentes, comportant en outre des moyens accouplés aux moyens régénérateurs pour envoyer par recirculation le liquide absorbant régénéré auxdits moyens d'élimination de la vapeur.

FIG. 1

FIG. 2

0 082 016